# EUROPEAN PATENT APPLICATION

(11) **EP 3 169 076 A1**
(43) Date of publication of application: **17.05.2017**
(21) Application number: 15194149.9
(22) Date of filing: 11.11.2015
(51) Int. Cl.: H04N 21/418, H04N 21/4367, H04N 21/4405, H04N 21/4408

(54) **PORTABLE DEVICE FOR PROCESSING ACCESS CONTROLLED MULTIMEDIA CONTENT**

(71) Applicant: Nagravision S.A., 1033 Cheseaux-sur-Lausanne (CH)
(72) Inventor: GREMAUD, Fabien, 1618 Châtel-St-Denis (CH); GOUPIL, Hervé, 1168 Villars sous Yens (CH)
(74) Representative: Leman Consulting S.A.

(57) **Abstract**

A portable multimedia processing device configured to provide access to conditional access multimedia content. The portable processing device being connectable to a host device configured to render the processed conditional access multimedia content comprises at least one conditional access agent configured to manage access rights to the multimedia content, at least one descrambler module configured to descramble conditional access multimedia content by using keys provided by the conditional access agent, at least one decoder module configured to decompress the descrambled conditional access multimedia content, a first port configured to input scrambled compressed multimedia content data received by the host device and to exchange control data with the host device, and a second port configured to output descrambled decompressed multimedia content data to the host device for rendering.

## Description

### Introduction

A portable device for processing access controlled multimedia content is disclosed. In particular, the portable device, associated with a host device, processes multimedia content streams received from a provider, the multimedia content once processed is rendered by a display of the host device.

### Technical background

A portable device configured to process multimedia content for rendering by a host device is generally known as a television dongle connected to a television set or a personal computer via a USB (Universal Serial Bus) port for example. The television dongle may be used to descramble access controlled multimedia content provided by, e.g., a television tuner, a local network or the Internet. In this case a subscriber purchases specific access rights to be recorded in the dongle which then operates as a Pay-TV security module.

Another type of television dongle is configured to be connected to a High-Definition Multimedia Interface (HDMI) port of the television set or a video display monitor. The dongle looks like a USB flash memory stick, and is small and convenient to watch television programs provided by various sources by using a built-in decoder. If the television dongle is inserted into an HDMI socket of a common television set, the common television set becomes a smart television set which can be used to watch a movie, surf the Internet, play a game, listen to music, and the like. Generally, the television dongle or HDMI dongle is operated and controlled by using a remote control.

### Summary

Embodiments of the present invention provide a portable device, according to claim 1, having a first port for receiving scrambled multimedia content data forwarded by a host device and a second port for returning processed multimedia content data ready to be rendered by the host device. The portable device preferably forms a dongle adapted to be connected to any host devices capable to render the processed multimedia content data.

According to preferred embodiment, the first port may comprise a standard universal serial data bus configured to receive from the host device scrambled compressed multimedia content data and control data, to return control data to the host device, and to receive power provided by the host device. The control data exchanged between the dongle and the host device may comprise operating data, commands and parameters. The second port may comprise a high-speed data path configured to forward the multimedia content data to the host device after having been descrambled and decompressed by the dongle.

The dongle comprises the necessary hardware and software modules for descrambling and decoding scrambled multimedia content data under control of the host device. The host device operates as multimedia content streams receiver and pre-processor for the multimedia content data and as a media player for the multimedia content once processed by the portable device.

The host device may allow multimedia content selection in a stream delivering multiple scrambled content data packets by using a browser or an electronic program guide. The selected multimedia content, demultiplexed from the stream by the host device is forwarded to the dongle through the first port which may be of USB (Universal Serial Bus) type. After processing by the dongle, the multimedia content data packets are returned to the host device through the high-speed data path comprising a HDMI (High Definition Multimedia Interface) port or a display port associated with an USB interface.

Other types of ports allowing a high data throughput may also be envisaged depending on the format and resolution of the multimedia content as for example ports and protocols adapted to ultra high definition (UHD) video content including 4K UHD (2160p) and 8K UHD (4320p).

### Brief description of the drawings

The following detailed description refers to the attached drawings in which:

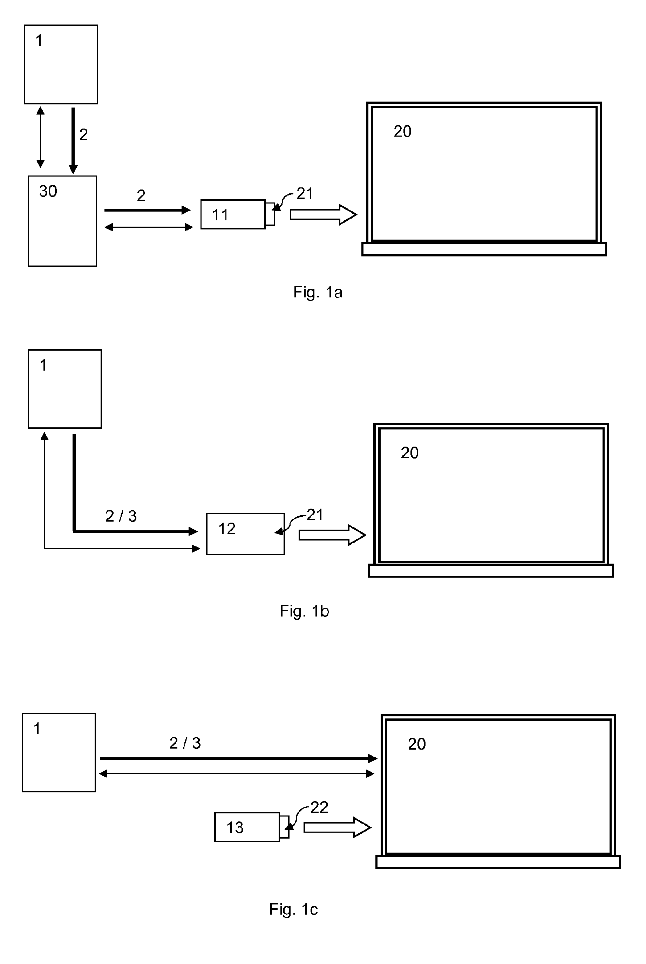

Figure 1a shows a dongle configured to be connected to a host device via a HDMI port according to prior art. A mobile device connected to Internet is provided with an application and an appropriate user interface configured to transfer content to the dongle.
Figure 1 b shows a conventional set top box configured to be connected to a host device via a HDMI port. The set top box receives, descrambles and decodes content for rendering on the host device.
Figure 1 c shows a dongle configured to be connected to a host device via a USB port according to the prior art. The dongle descrambles content received by the host device which decodes the content for rendering.
Figure 2a shows a dongle according to an embodiment of the invention, the dongle having a standard universal serial data port and a display port descrambles and decodes content received by the host device.
Figure 2b shows a dongle according to a further embodiment of the invention, the dongle having standard universal serial data port and a HDMI port descrambles and decodes content received by the host device.
Figure 3 shows a diagram of a host device and a dongle according to the invention; the dongle is configured to descramble and decode demultiplexed content provided by the host device, and to return the decoded content to the host device for rendering.

### Detailed description

Figure 1a illustrates a known example of a portable device called "Chromecast" consisting of a dongle 11 configured to be plugged into a HDMI port 21 of a host device 20 as for example a television set or a monitor, and to be powered, via a device's micro-USB port, to an external power supply or a USB port of the television set. The dongle 11 connects to the Internet through a local wireless network such as Wi-Fi and allows streaming multimedia OTT content (over-the-top content) 2 to be viewed on the display of the television set. Streamed multimedia OTT content 2 may reach the television set in a variety of manners. One example is from a mobile device 30 such as a smartphone or a tablet provided with a specific application. The mobile device may transfer multimedia OTT content 2 from the mobile device 30 to the television set for display on the television set.

The dongle 11 decodes or decompress the multimedia OTT content 2 received form a provider 1 via the local Wi-Fi network before forwarding it to the television set via the HDMI port. The multimedia OTT content 2 can also be provided by an internal memory of the mobile device and reproduced on the television screen by using a specific casting application.

Figure 1 b shows an example of a conventional set top box 12 configured to receive multimedia content 3 from a DVB (Digital Video Broadcasting) type broadcast network and/or OTT content 2 from a provider 1 via an IP network such as Internet. The set top box 12 descrambles and decodes the multimedia content before forwarding to the host device 20 via an HDMI port 21. A user interface may be provided by a middleware of the set top box which manages different services exploitable by the user such as information on available content, content selection, a media player, content storage, etc.

In the examples illustrated by figures 1 a and 1 b, the multimedia content data is received by the dongle 11, respectively by the set-top-box 12 before forwarding to the host device 20.

Figure 1 c shows a further known example of a portable device or dongle 13 to be connected to the host device 20 via a standard universal serial data port such as USB. Unlike the example of figure 1 a, the dongle does not connect to a local network; its main function consists of descrambling compressed multimedia content received by the host device 20. The multimedia content 2 or 3 is streamed by the provider 1 to the host device 20 via at least one DVB (Digital Video Broadcast) tuner and/or via a local wired or wireless network such as a cable or Wi-Fi. The dongle 13 descrambles multimedia content by protecting its decryption key at the highest security level, while the resulting compressed multimedia content data is protected by the host device 20.

In this example, the dongle 13 descrambles the compressed multimedia received by the host device 20 while the host device 20 decodes the descrambled content.

The notion of descrambling is defined herein as decrypting multimedia content data by using a cryptographic algorithm with at least one cryptographic key or control word provided by entitlement control messages transmitted by a conditional access system. The control word can be used only when access rights of a subscriber recorded in the host device or in the portable device are valid.

The notion of decoding is defined herein as decompressing multimedia content data by using codec algorithms. The decoding operation is performed after descrambling the multimedia content data. A codec comprises a computer program capable of encoding / compressing or decoding / decompressing a digital data stream. Once decoded / decompressed, the multimedia content data is ready to be rendered by the host device as audio content, video content or audio / video content.

A preferred embodiment of the portable multimedia processing device according to the invention comprises a pay TV applications dongle configured to be plugged into a corresponding port of a host device. The dongle is further configured to descramble and decode multimedia content streams for rendering by a universal host device that is the same for all subscribers of a pay TV operator such as for example a television set, a tablet, a smartphone or a personal computer.

The solution as described hereafter addresses the protection of compressed multimedia content data and allows an operator to propose a complete user interface to be provided preferably by the dongle instead of the host device.

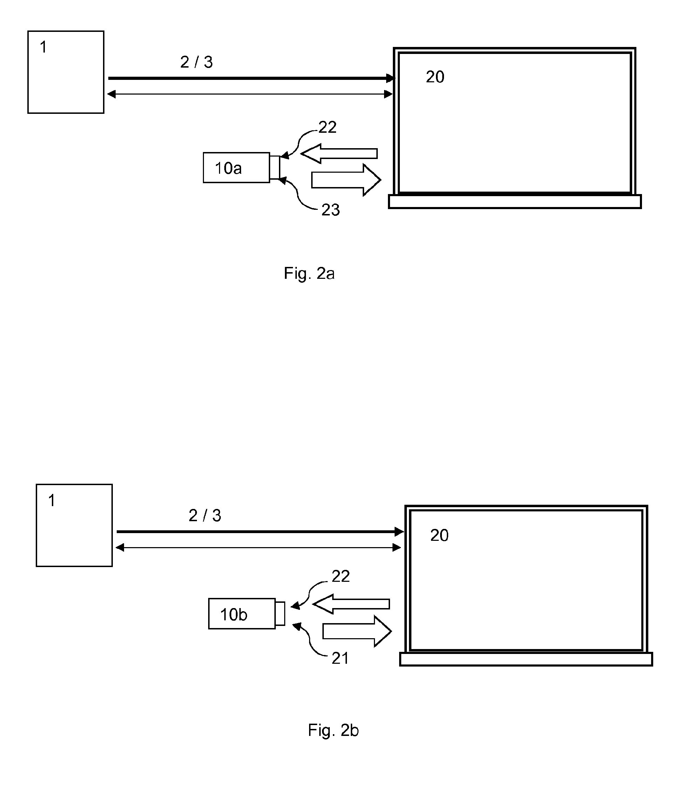

An example of a pay TV dongle illustrated by figure 2a comprises a dongle 10a, 10b having a standard universal serial data bus associated with a high-speed data path configured to provide the decoded multimedia content data directly to the host device 20.

The standard universal serial data bus is configured to receive from the host device 20 scrambled compressed multimedia content data and control data, to return control data to the host device, and to receive power provided by the host device.

The standard universal serial data bus may be of type USB 2.0, USB 3.0 or USB 3.1, where the different types stand out from their throughput having a maximum value of respectively 480 Mbit/s, 5 Gbit/s and 10 Gbit/s.

The high-speed data path may include a standardized display port based on a technology developed by the Video Electronics Standards Association (VESA) allowing transmitting audio / video data intended to be displayed.

According to a practical example, the standard universal serial data bus and the high-speed data path may be grouped in a standardized reversible USB type C connector of 24 pins. The "DisplayPort Alternate Mode on USB Type-C Connector Standard" published by VESA defines several ways to send display port signals over the USB Type-C connector by using one or more differential pairs forming the high-speed data path combined with USB 2.0, USB 3.0 or USB 3.1 differential pairs of the standard universal serial data bus.

Figure 2b shows a further embodiment where the high-speed data path may include a HDMI port 21 comprising a standard HDMI, mini-HDMI and micro-HDMI connector. The first port, including the standard universal serial data bus 22, uses physical connections allowing communication performance according to USB communication standard (i.e. USB 2.0, USB 3.0 or USB 3.1), including USB, mini-USB and micro-USB.

According to a non illustrated embodiment, the link comprising the standard universal serial bus and the high-speed data path between the host device and the dongle may be wireless. In this case, the host device and the dongle may comprise a USB / display port or a USB / HDMI transceiver using an appropriate communication protocol allowing broadband wireless communication between the host device and a distant dongle in conditions similar to those of a wired connection. The distant dongle, including the same functionalities as those of the wired dongle, may be in form of a dedicated dongle box, a tablet, a smartphone, or a personal computer placed close to the host device as for example in a same room.

According to a further embodiment, the dongle functionalities may be deported on one or more networked computers or cloud. In this case, the host device may be associated with a specific interface module, instead of a wired dongle, allowing secure data exchange with the "deported dongle" via a wireless local access network of type WiFi or a mobile phone network of type EDGE (Enhanced Data Rates for GSM Evolution), 3G, 4G, 5G etc.

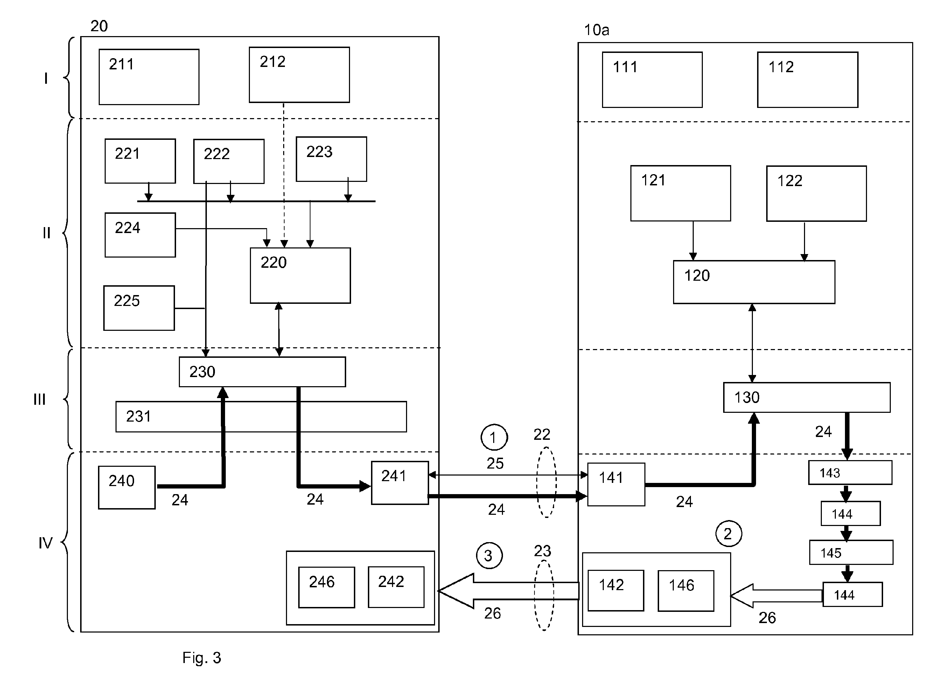

In summary, the dongle 10a, 10b associated with the host device 20, represented by figure 3, operates as follows:
1) the host device 20 receives and provides scrambled compressed multimedia content 24 through the standard universal serial data bus 22,
2) the dongle 10a, 10b descrambles the multimedia content by using an embedded conditional access agent 111 providing the necessary decrypting keys, and decodes the descrambled multimedia content,
3) the dongle 10a, 10b returns the decoded descrambled multimedia content 26 to the host device 20 via the high-speed data path including the display port interface 23 or the HDMI interface 21. The output descrambled decoded content 26 may be protected either with a standard protection of the type HDCP (High-bandwidth Digital Content Protection) applicable on the display port or the HDMI interface or by using a dongle-host Hardware Secure Link.

In addition to the protection of the multimedia content data, the dongle 10a, 10b may provide a full operator-specific user interface experience in a similar way than a standard set top box. The dongle user interface can be controlled using the standard CEC (Consumer Electronic Control) but mapped over USB as for example mapping the Standard CEC in an existing Dongle USB Command & Control profile.

Accordingly, a multimedia system represented by the diagram of figure 3 comprises a dongle 10a, 10b and a host device 20 connected to the dongle 10a, 10b. The dongle 10a, 10b comprises an input interface including a standard universal serial data bus 22 for receiving scrambled compressed audio-video content 24 and a high-speed data path 23 output interface for outputting descrambled and decompressed (or decoded) audio-video content 26. The host device 20 is used for rendering on a display the processed audio-video content data received from the dongle 10a, 10b.

According to an embodiment, the dongle 10a, 10b and the host device 20 of this multimedia system may comprise hardware and software modules arranged according to a layered architecture of, for example, four main layers I, II, II, IV such as an application layer I, a middleware layer II, an operating system and drivers layer III and a system on chip (SoC) layer IV comprising communication interfaces and modules dedicated to functionalities requiring a high security level.

According to a further embodiment, the dongle 10a, 10b may comprise, instead of a single chip, multiple chips configuration as, for example, one or more secure chips coupled with one or more high performance chips to form a System In Package (SIP) inside the dongle 10a, 10b. In this case, the hardware and software modules may be distributed in several chips depending on their functions, as for example functions related to a high security level such as descrambler, decoder, cryptographic keys manager, etc. may be grouped in one secure chip, while standard modules such as operating system, drivers, media player etc. may be incorporated in specific interconnected chips.

The host device 20 such a television set, a tablet or a personal computer, having a universal configuration independent of user's subscription, may comprise standard hardware and software modules for receiving broadcast content streams or OTT multimedia content streams. These modules may be configured in a way to operate in association with any multimedia processing devices connected to the host device 20, even when the host device 20 is connected to devices other than a dongle 10a or 10b as shown by figures 2a, 2b and 3.

When the dongle 10a, 10b is connected to the host device 20, a specific dongle driver 230 may generally be installed automatically or manually by using an appropriate user interface produced by an operating system 231.

In fact, the host device 20 may comprise a television application 211 and a browser application 212 for searching and selecting specific services for controlling playback of multimedia content provided by different sources. The middleware modules, implemented over an operating system 231 and a dongle driver 230, drive one or more tuner modules configured to receive multimedia streams from various sources or providers. The tuner modules may comprise for example: a cable or satellite DVB receiver module 221, an IP network module 225, or a Hybrid Broadcast Broadband TV module 223. A media player 222 allows playing the received multimedia content once processed by the host device 20 and the dongle 10a, 10b.

A common interface module 220 using a command and control protocol communicates with and controls the hardware and software modules 211, 212 in the application layer I, the middleware modules 221, 222, 223, 224, 225 in the middleware layer II and the operating system 231 and dongle driver 230 in the operating system and drivers layer III. User commands for selecting services and controlling operation of the host device 20 issued from a user interface may be relayed by a standard CEC (Consumer Electronic Control) module 224 associated with the common interface module 220.

The system on chip layer IV of the host device 20 may comprise at least: a demultiplexer 240, a universal serial data bus interface module 241 and a high-speed data path interface module 242 including for example the display port or the HDMI interface.

The demultiplexer 240 is configured to select and output a single content stream 24 from an input stream containing multiple streams in a format such as MPEG (Moving Picture Experts Group) for example.

The single content stream 24 output by the demultiplexer 240, being in compressed and scrambled form, is forwarded, via the dongle driver 230, to the universal serial data bus interface module 241 for transmitting to the dongle 10a, 10b while the multimedia content processed by the dongle 10a, 10b is received by the host device 20 via the high-speed data path interface 242 module associated with the universal serial data bus interface module 241.

The dongle 10a, 10b may comprise an application layer I including at least one operator application 112 configured by an operator providing conditional access multimedia content and at least one CAS / DRM (Conditional Access System / Digital Rights Management) agent 111 configured according to subscription parameters of a user having purchased access rights related to predefined content streams.

The CAS / DRM agent 111 filters single content stream 24 by checking access conditions of the multimedia content in respect to subscriber's rights (entitlements) stored in a secure memory associated to the CAS / DRM agent 111. When the user (subscriber) access rights are considered as valid, required decrypting keys may be made available for descrambling. In usual pay TV applications, the descrambling may be performed by means of decrypting keys called control words (CW) extracted from Entitlement Control Messages (ECM) transported in a control stream accompanying the scrambled multimedia content stream.

The user access rights may be managed by entitlement management messages (EMM) also transmitted by the control stream and forwarded by the host device 20 to the CAS / DRM agent 111 via the standard serial data bus interface 22. The descrambler obtains the control words CW only if the user access rights recorded in the secure memory are not expired and meet requirements of the subscription.

The middleware layer II of the dongle 10a, 10b may comprise a DVB module 121, a media player 122 to be associated with the media player 222 of the host device 20 and a common interface module 120 coupled to a dongle driver 130 in the operating system and drivers layer III. The common interface module 120 uses a command and control protocol similar to the command and control protocol of the host device 20, configured to communicate with and control the dongle driver module 130 jointly with the corresponding dongle driver module 230 of the host device 20.

The system on chip layer IV of the dongle 10a, 10b may comprise at least a descrambler module 143, a decoder module 145, a standard serial bus interface module 141 and a display port or HDMI port interface module 142.

The descrambler module 143 is configured to descramble multimedia content 24 by using a predefined cryptographic algorithm and the control word CW obtained from the CAS / DRM agent 111. The decoder module 145 is configured to decompress the descrambled multimedia content and to transmit the decompressed descrambled content 26 to the host device 20 via the display port or the HDMI port interface module 142. The standard serial bus interface module 141 is configured to receive the single scrambled compressed multimedia content stream 24 output by the host device 20 through the corresponding standard serial bus interface module 241. The standard serial bus interface module 141 further exchanges control data 25 with the corresponding standard serial bus interface module 241 of the host device 20, the control data 25 being relayed by the respective dongle drivers 230, 130 of the host device 20 and the dongle 10a, 10b. The control data 25 may comprise operating data and commands, instructions, requests with their related parameters and corresponding responses from the host device 20, respectively the dongle 10a, 10b.

According to an option, the output descrambled and decompressed multimedia content 26 may be protected by scrambling with a local scrambler module 146 associated with the display port or the HDMI port interface module 142. In this case, the local scrambler module 146 may be coupled with the decoder module 145 in the system on chip layer IV of the dongle 10a, 10b. The local scrambling may be performed by using a predefined cryptographic algorithm with at least one local key preferably stored in a memory of the scrambler module 146. The protection by local scrambling aims to prevent misuse of the output descrambled and decompressed multimedia content after extraction from the high-speed data path between the dongle and the host device.

The cryptographic algorithm used by the descrambler module 143 or by the optional local scrambler module 146 may comprise an algorithm as for example DES (Data Encryption Standard), RSA (Rivest, Shamir, Adleman), AES (Advanced Encryption Standard), IDEA (International Data Encryption Algorithm), etc.

In order to descramble the received locally scrambled descrambled and decompressed multimedia content data, the host device 20 includes a local descrambler module 246 associated with the display port or the HDMI port interface module 242. The local descrambler module 246 of the host device 20 uses a cryptographic algorithm and at least one decrypting key corresponding to those used by the scrambler module 146 of the dongle 10a, 10b. Information related to the encryption / decryption algorithm and the at least one corresponding encryption / decryption key to be used may be exchanged between the dongle and the host device, via the standard serial bus interface modules 141, 241, at first connection or at each connection of the dongle to the host device.

According to a further option, the descrambled multimedia content may be watermarked by a watermarking module 144 configured to watermark the descrambled multimedia content at output of the descrambler module 143 or to watermark the descrambled and decompressed multimedia content at output of the decoder module 145 before transmitting to the host device 20 via the high-speed data path.

The watermarking module 144 adds for example an identifier of the dongle, a symbol or a character string pertaining to the operator or provider or any other sign allowing determining origin of the multimedia content. The watermark may be configured to be visible in a rendered multimedia content or invisible but machine readable.

The dongle may operate without local scrambling option and without watermarking option as well as it may operate with one or both options together. The corresponding local scrambling module 146 and watermarking module 144 may already be implemented in a standard configuration of the dongle but they may be activated or not according to user preferences.

According to a further embodiment, the dongle may support PVR (Personal Video Recording) features comprising fast and efficient trick modes. In this case, the CAS / DRM agent 111 of the dongle may re-scramble with a local encryption key and index the descrambled and decompressed multimedia content at the output of the decoder module 145. The re-scrambling operation may be performed by using a cryptographic algorithm similar or different from the cryptographic algorithm used by the descrambler module 143 with the local encryption key generated by the CAS / DRM agent 111 or pre-stored in a memory thereof. The local encryption key may be derived for example from user access rights related to the multimedia content regarding storing and replaying possibilities before expiration of a predefined time period.

The re-scrambling operation may be initiated when a user activates a recording command for a multimedia content selected on the user interface. The multimedia content once re-scrambled may be stored in a mass memory such as a fixed or removable hard disk, an optical disk or a removable flash memory stick associated with the host device.

At playback of a recorded re-scrambled content, the CAS / DRM agent 111 checks related user access rights, descrambles with the local key when the user access rights are valid, and forwards the obtained multimedia content to the host device 20 via the display port or the HDMI port interface module 142. A multimedia content recorded in a removable storage device thus cannot be transported to be played back by another host device without being coupled with the dongle previously used for recording.

Although embodiments of the present disclosure have been described with reference to specific example embodiments, it will be evident that various modifications and changes may be made to these embodiments without departing from the broader scope of these embodiments. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived there from, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A portable multimedia processing device (10a, 10b) configured to provide access to conditional access multimedia content (2, 3), the portable multimedia processing device (10a, 10b) being connectable to a host device (20) configured to render the processed conditional access multimedia content (2, 3), comprising:
at least one conditional access agent (111) configured to manage access rights to the multimedia content,
at least one descrambler module (143) configured to descramble conditional access multimedia content (2, 3) by using keys provided by the conditional access agent (111),
at least one decoder module (145) configured to decompress the descrambled conditional access multimedia content,
a first port (22) configured to input scrambled compressed multimedia content data (24) received by the host device (20) and to exchange control data (25) with the host device (20), and
a second port (21, 23) configured to output descrambled decompressed multimedia content data (26) to the host device (20) for rendering.

2. The portable multimedia processing device (10a, 10b) according to claim 1 **characterized in that** the first port (22) comprises a standard universal serial data bus configured to receive from the host device (20) scrambled compressed multimedia content data (24) and control data (25), to return control data (25) to the host device (20), and to receive power provided by the host device (20).
and **in that** the second port (21, 23) comprises a high-speed data path configured to forward the descrambled decompressed multimedia content data (26) to the host device (20).

3. The portable multimedia processing device (10a) according to claim 1 and 2 **characterized in that** the high-speed data path comprises a display port associated with the standard universal serial data bus.

4. The portable multimedia processing device (10b) according to claim 1 and 2 **characterized in that** the high-speed data path comprises a HDMI port associated with the standard universal serial data bus.

5. The portable multimedia processing device (10a) according to anyone of claim 1 to 3 **characterized in that** the standard universal serial data bus and the high-speed data path are grouped in a USB type C connector.

6. The portable multimedia processing device (10a, 10b) according to anyone of claims 1 to 5, **characterized in that** it further comprise a local scrambler (146) associated to the second port (21, 23), the local scrambler (146) being configured to encrypt the descrambled and decompressed multimedia content (26) with at least one local key before outputting to the host device (20).

7. The portable multimedia processing device (10a, 10b) according to anyone of claim 1 to 6 **characterized in that** it further comprise a watermarking module (144) configured to watermark the descrambled multimedia content at output of the descrambler module (143) or to watermark the descrambled and decompressed multimedia content (26) at output of the decoder module (145) before transmitting to the host device (20).

8. The portable multimedia processing device (10a, 10b) according to anyone of claim 1 to 5 **characterized in that** the conditional access agent (111) is further configured to re-scramble with at least one encryption key and to index the descrambled and decompressed multimedia content (26) before outputting to the host device (20).

9. The portable multimedia processing device (10a, 10b) according to anyone of claim 1 to 8 **characterized in that** it is build in form of a dongle configured to be plugged into a corresponding port of a host device (20) selected in a group comprising a television set, a tablet, a smartphone or a personal computer.
